Europäisches Patentamt

European Patent Office

Office européen des brevets

(11) Veröffentlichungsnummer: **0 493 628 A1**

## EUROPÄISCHE PATENTANMELDUNG

(21) Anmeldenummer: **90125812.9**

(22) Anmeldetag: **29.12.90**

(51) Int. Cl.5: **G01N 9/20, H01M 10/48**

(43) Veröffentlichungstag der Anmeldung:
**08.07.92 Patentblatt 92/28**

(84) Benannte Vertragsstaaten:
**AT CH DE ES FR GB LI NL**

(71) Anmelder: **I.V.E.L. S.R.L.**
**Via Mascagni, 13**
**I-20032 Cormano (Milano)(IT)**

(72) Erfinder: **Breseghello, Pietro Romano**
**Via Villa, 20**
**I-20057 Vedano al Lambro/Milano(IT)**

(74) Vertreter: **Jackisch-Kohl, Anna-Katharina et al**
**Patentanwälte Jackisch-Kohl & Kohl**
**Stuttgarter Strasse 115**
**W-7000 Stuttgart 30(DE)**

(54) **Dichtegeber zur Anzeige des Ladezustandes einer Batterie.**

(57) Der Dichtegeber mißt kontinuierlich die Dichte des Elektrolyten der Batterie und wandelt den gemessenen Wert in ein elektrisches Signal um. Zu diesem Zweck ist ein Meßsystem vorgesehen, das mit dem mit der Dichte des Elektrolyten veränderlichen Schwimmerdruck arbeitet.

FIG. 1

EP 0 493 628 A1

Die Erfindung betrifft einen Dichtegeber zur Anzeige des Ladezustandes einer Batterie nach dem Oberbegriff des Anspruches 1.

Bleibatterien werden im allgemeinen in stationären Anlagen, Hubwagen, Ladeanlagen mit Solarbatterien usw. verwendet.

Diese Batterien werden im allgemeinen bis zur Erreichung einer Spannung von 2,45 V pro Element aufgeladen, da bei diesem Wert die Batterie als geladen angesehen wird. Das Entladen erfolgt in analoger Weise bis zu einem Mindestwert von 2 V pro Element; bei diesem Wert wird die Batterie als entladen angesehen. Der berücksichtigte Parameter ist jedoch im Hinblick auf den Ladezustand aus verschiedenen Gründen nicht präzise; darunter fällt auch der Lade- bzw. Entladestrom während der Messung.

Der genaueste zur Verfügung stehende Parameter für die Bestimmung des Ladezustandes ist die Elektrolytendichte, die dem Ladezustand der Bleibatterie linear folgt, und zwar von einem Mindestwert von 1,09 - 1,1 kg/l für die Bedingung "entladen" bis 1,30 - 1,33 kg/l für die Bedingung der maximalen Ladung.

## Stand der Technik

Die Kontrolle des Ladezustandes erfolgt mit Hilfe verschiedener manueller Systeme; wir führen einige davon auf:

1) Ampèreprüfzange. An die Batterie wird für kurze Zeit eine sehr hohe Last (1 A/Ah) angelegt; man mißt die Spannung, die die Batterie unter diesen Bedingungen halten kann. Je höher die Spannung ist, desto größer ist die Ladung; dieses System wird in Elektroautos und in Fahrzeugbatterien verwendet.

2) Messung der Elektrolytdichte mit Hilfe eines Dichtemessers, der auf der Grundlage des Archimed'schen Prinzips arbeitet. Eine geeichte Probe mit einem geeigneten Gewicht taucht um so weniger in die Flüssigkeit ein, je höher die Dichte der Flüssigkeit ist.

## Ziel - Idee und Vorteile der Erfindung

Aufgabe der vorliegenden Erfindung ist es, den Wert des Ladezustandes der Bleibatterie in ein meßbares und an einem anderen Ort verwendbares elektrisches Signal umwandeln zu können.

Die Idee, auf welche sich die Erfindung stützt, ist, kontinuierlich die Dichte des Elektrolyten zu messen und diesen Wert in ein elektrisches Signal (Spannung oder Strom) umzuwandeln. Das Ausgangselement für die Messung ist die Dichte der Flüssigkeit, weshalb es sich um einen Dichtemesser mit elektrischer Übertragung handelt.

Die Vorrichtung weist zahlreiche Vorteile auf:

- Möglichkeit der kontinuierlichen Instrumentenanzeige während des Ladens, der Entladung und in Ruhestellung, und zwar unabhängig von den momentanen Strömen.

- Möglichkeit der Unterbrechung des Ladens oder der Entladung bei genau festgelegten Werten, und zwar unabhängig von der Größe des Stroms mit dem Vorteil der bestmöglichen Nutzung der Batterie.

Weitere Merkmale der Erfindung ergeben sich aus den weiteren Ansprüchen, der Beschreibung und der Zeichnung.

In der Zeichnung ist ein Ausführungsbeispiel eines erfindungsgemäßen Dichtegebers bzw. Meßwertwandlers dargestellt, auf welches dieser Wandler selbstverständlich nicht beschränkt bleibt.

Es zeigen:

Fig. 1     eine schematische Darstellung eines erfindungsgemäßen Dichtemessers, und

Fig. 2     eine schematische Darstellung der im Dichtemesser gemäß Fig. 1 untergebrachten elektronischen Schaltung.

Im Ausführungsbeispiel besteht der Dichtemesser im wesentlichen aus einem Zylinder 1 aus säurebeständigem Kunststoff ("Teflon" o.a.), der im unteren Teil eine nach unten geöffnete zylindrische glockenförmige Kammer 2 aufweist, in die ein zylindrischer Schwimmer 3 aus Kunststoff eingeführt ist, der an der Oberseite nach innen weisend eine Weichmetallscheibe 4 mit einem nach unten gerichteten Magneten 4a aufweist.

In der unteren Kammer der zylindrischen Glocke ist eine elektrische Wicklung 5 eingelassen, die im folgenden Elektromagnet genannt wird. In den Boden der Glocke ist ein Semiferrit mit Feder 6 mit einer elektrischen Wicklung eingelassen, die über eine im Zylinder befindliche elektronische Schaltung 7 als lineare Näherungsvorrichtung arbeitet. Diese technologisch schon bekannte Vorrichtung emittiert ein elektrisches Signal, das umgekehrt proportional (und linear variabel) zum Abstand zwischen dem Ferrit und der im Schwimmer enthaltenen, darunterliegenden Eisenmetallplatte ist.

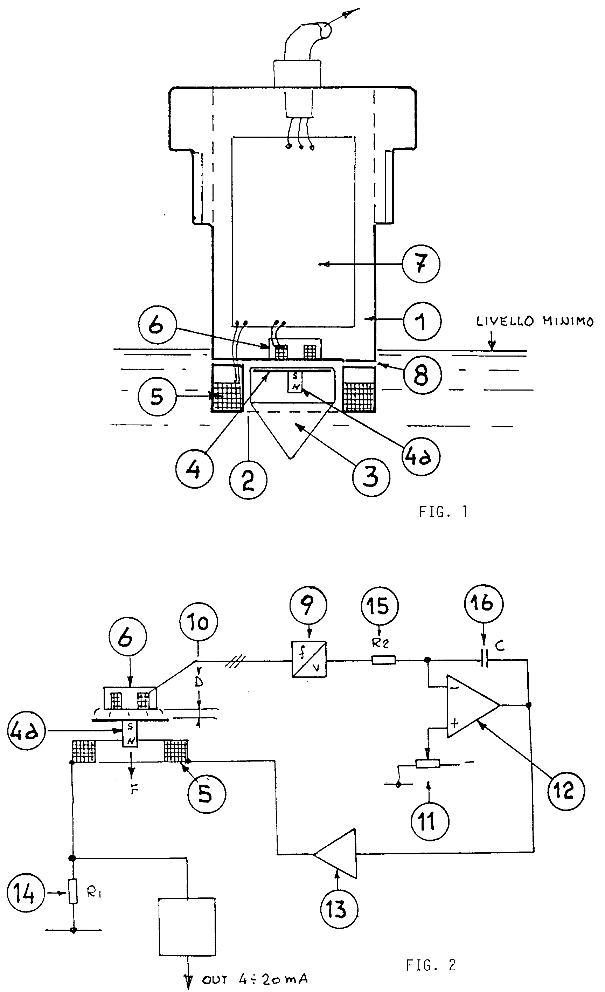

Im Hinblick auf eine korrekte Funktion muß der Schwimmer vollständig in die Flüssigkeit eingetaucht sein, weshalb der Mindestflüssigkeitsstand über dem Boden der Glocke 2 liegen muß. Vorgesehen sind Bohrungen, über welche die Luft entweichen kann, um das Vollaufen der Glocke 2 sicherzustellen. Die Vorrichtung funktioniert folgendermaßen (siehe Fig. 2):

- Das elektrische Signal (Spannung), das von einem Verstärker 9 umgekehrt proportional zum Abstand 10 zwischen der Eisenmetallplatte und dem Ferrit ausgeht, wird mit der an einem Potentiometer 11 voreingestellten Spannung mit Hilfe einer Komparator-Integrator-Vorrichtung 12 verglichen. Das Ausgangssignal des Komparators 12 wird dem Elektromagneten 5 über einen linearen Stromverstärker 13 zugeführt. Die elektronische Schaltung muß so angeordnet werden, daß

- die Erregung des Elektromagneten 5 erhöht wird, wenn sich die Platte aufgrund des Flüssigkeitsdrucks schwimmend dem Ferrit nähert.
- die Erregung des Elektromagneten 5 verringert wird, wenn die Platte sich von dem Ferrit entfernt.
- der Abstand D (10), bei dem der Erregungswert im Gleichgewicht ist, nur einem Abstand entspricht, der genau definiert und durch den am Potentiometer 11 voreinstellbaren Spannungswert bestimmbar ist.

Diese schwingungsfreie Gleichgewichtsbedingung wird durch eine Integrationsfunktion 12 gewährleistet, die langsame Änderungen bei der Steuerung des Elektromagneten bestimmt.

Man kann sagen, daß die Kraft F, die auf einen in das Magnetfeld einer Spule eingetauchten Dauermagneten ausgeübt wird, eine lineare Funktion der magnetomotorischen Kraft H ist (Ampèrewindungen); selbstverständlich ist die Kraft F nur für einen einzigen Abstand zwischen dem Magneten und der Spule gegeben, da jeder Position zwischen den beiden Elementen verschiedene magnetische Felder (und somit andere Kräfte) entsprechen.

Selbstverständlich ist in unserem Fall die Position des Magneten gegenüber der Spule konstant; sie wird durch das aus dem Ferrit 6, der durch die fest mit dem Magneten verbundene Eisenmetallplatte 4 beeinflußt wird, bestehenden Meßsystem so gehalten, daß durch die Übertragung des Signals auf den Komparator 12 die Spule mit einem solchen Wert erregt wird, daß der Schwimmer eingetaucht bleibt, und zwar mit einem vorgegebenen Abstand D (10).

Man kann deshalb daraus schließen, daß der Wert des für die Aufrechterhaltung der stabilen Position des Schwimmers erforderlichen Stroms linear proportional zu der zum Ausgleich des Schwimmerdrucks erforderlichen Kraft und somit zur Dichte der Flüssigkeit ist.

Der Widerstand R1 (14), durch den der Erregerstrom der Spule fließt, ergibt eine Spannung, die proportional zur Dichte des Elektrolyten ist, die durch eine geeignete Verarbeitung für alle möglichen Zwecke (Ladekontrolle, Entladungsgrenze usw.) verwendet werden kann.

## Patentansprüche

1. Dichtegeber zur Anzeige des Ladezustandes einer Batterie,
dadurch gekennzeichnet, daß er ein aktives System zur Messung des mit der Dichte des Elektrolyten der Batterie veränderlichen Schwimmdrucks aufweist, mit dem ein der Dichte entsprechendes elektrisches Signal erzielt wird.

2. Dichtegeber nach Anspruch 1,
dadurch gekennzeichnet, daß er eine Verstärkerschaltung mit geschlossenem Ring aufweist, die im wesentlichen aus folgenden hintereinander angeordneten Elementen besteht: einem Ferrit (6) mit entsprechendem Schwingungskreis und Decoder (9), einem Integrator-Komparator (12), einem Linearverstärker (13), einer elektromagnetischen Spule (5), einem Dauermagneten (4a) und einer Eisenmetallplatte (4).

3. Dichtegeber nach Anspruch 1 oder 2,
dadurch gekennzeichnet, daß durch die Kontrolle des Erregerstroms eines Elektromagneten (5), der den Schwimmer (3) in einer mechanisch eindeutigen Position gegenüber dem Elektromagneten hält (Abstand D (10) konstant), ein zur Elektrolytdichte proportionales Ausgangssignal erzeugt wird.

4. Dichtegeber nach einem der Ansprüche 1 bis 3,
dadurch gekennzeichnet, daß er einen Integrator (12) aufweist, der (aufgrund der durch den Widerstand R2 (15) und den Kondensator C (16) gegebenen Zeitkonstante in Kombination mit dem Gewinn des operativen Verstärkers (12)) ein Signal mit sehr langsamen Amplitudenänderungen erzeugt, damit ein Pendeln des Systems verhindert und eine stabile Position des Schwimmers (3) erreicht wird.

FIG. 1

OUT 4÷20 mA

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 484 714 (COMPAGNIE EROPEENE D'ACCUMULATEURS) | 1 | G01N9/20 H01M10/48 |
| Y | * Seite 1, Zeile 34 - Seite 2, Zeile 5 * * Seite 2, Zeile 18 - Seite 3, Zeile 13; Abbildungen 1,2 * --- | 2,3 | |
| Y | EP-A-77 305 (ASSENZA, DONELLO) | 2,3 | |
| A | * Seite 6, Zeile 6 - Zeile 15 * * Seite 9, Zeile 17 - Seite 10, Zeile 4; Ansprüche 1-7; Abbildungen 4-6 * --- | 1,4 | |
| A | PATENT ABSTRACTS OF JAPAN vol. 9, no. 127 (P-360)(1850) 31. Mai 1985 & JP-A-60 10 149 (NEC HOME ELECTRONICS ) 19. Januar 1985 * das ganze Dokument * ----- | 1-4 | |

| | | | RECHERCHIERTE SACHGEBIETE (Int. Cl.5 ) |
|---|---|---|---|
| | | | G01N H01M |

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1991 | MILLS J. |